# EUROPEAN PATENT SPECIFICATION

(11) **EP 1 885 992 B1**
(45) Date of publication and mention of the grant of the patent: **09.03.2016**
(21) Application number: 06726506.6
(22) Date of filing: 23.03.2006
(51) Int. Cl.: E21B 36/00

(54) **METHOD FOR DISSIPATING HEAT UNDERGROUND**
VERFAHREN ZUM ABFÜHREN VON WÄRME UNTER DER ERDE
TECHNIQUES FACILITANT L'ÉVACUATION DE LA CHALEUR DANS LE SOL

(30) Priority: 05.04.2005 US 99023
(43) Date of publication of application: 13.02.2008
(73) Proprietor: HALLIBURTON ENERGY SERVICES, INC., Duncan, OK 73533 (US)
(72) Inventor: MATULA, Gary, W., Houston, TX 77043 (US); MCCLAIN, Toby, N., Kingwood, TX 77345 (US)
(74) Representative: Turner, Craig Robert
(86) International application number: PCT/GB2006/001094
(87) International publication number: WO 2006/106299

(56) References cited:
- US-A- 5 226 961
- US-A- 5 488 991
- US-A- 6 150 601
- US-A1- 2003 085 039
- US-A1- 2005 166 802
- US-B1- 6 251 179

## Description

### BACKGROUND OF THE INVENTION

### 1. Field of the Invention

This invention relates to the underground use of fluids having high thermal conductivity or low thermal resistivity and their use underground. More particularly, this invention relates to methods for dissipating heat underground, particularly heat associated with buried high voltage power lines and other buried electrical transmission and distribution equipment such as cables.

### Description of Relevant Art

Increasingly, electrical equipment such as high voltage transmission and distribution power lines are being installed (or buried) underground, for safety, ecological, aesthetic, and/or operational reasons. For example, the advantages of buried power lines in tropical regions, where above ground lines are vulnerable to high winds and rains due to tropical storms and hurricanes, are readily apparent. However, the capabilities of such installations are limited by the ability of the installations to dissipate heat generated by the flow of electrical power through the equipment. If the thermal resistivity of the environment surrounding the buried equipment is unsatisfactorily high, the heat generated during functioning of the equipment can cause an increase in the temperature of the equipment beyond tolerable limits resulting over time in the premature failure or destruction of the equipment.

Currently, the industry typically addresses dissipation of heat around buried power lines in one of two basic ways, both of which involve placing a thermally conductive material around the outside of power line cable (whether or not the cable is strung through a carrier pipe). One way uses bentonite grout to which sand may be added to increase thermal conductivity. The other way uses a cement or similar cementitious material containing sand to provide thermal enhancement. The thermally conductive material is typically installed by either digging a trench and backfilling around the cable with the thermally conductive material or by drilling a bore (hole) and then pulling the cable through the bore containing the thermal enhancement material.

Without sand, bentonite grout does not have high thermal conductivity properties. Typical thermal conductivity values for bentonite grouts range from about 0.6 W/mK to 1.0 Wm//K (0.4 to about 0.6 BTU/hr ft°F). The addition of sand of an appropriate size can increase such thermal conductivity to a range of about 1.7 to 2.1 W/mK to (1.0 to about 1.2 BTU/hr ft°F). However, the sand can cause placement problems and high pump pressures as the thermally conductive grout is placed. High pump pressures can lead to a "frac out" situation where the material induces fractures in the soil through which the material can break through to the surface. When the installation is being placed under a roadway, for example, such a "frac out" can cause a highly undesirable "hump" in the road surface. Use of cement grout can magnify such problems. Use of sand can also lead to excessive friction and problems associated therewith. For example, in the case of a pipe bundle containing cables, such friction from sand can result in pulling forces that can exceed the strength of the cable or pipe bundle causing the bundle to separate during installation. Backfilling soil with sand added after the pipe installation might be used to avoid such installation friction but backfilling may not always be possible or effective for the full length of the installation. Further, additional wear caused by the sand to pumps and pump parts remains a concern.
US5226961 discloses cements comprising graphite for use in heat injection wellbores.
US6251179 discloses thermally conductive grouts comprising sand for dissipation of heat from geothermal equipment.

### SUMMARY OF THE INVENTION

### According to an aspect of the invention, there is provided a method according to claim 1.

### According to another aspect of the invention, there is provided a method according to claim 7.

The present disclosure provides a product or composition that improves the thermal conductivity properties of the environment for buried or underground electrical equipment such as high voltage transmission and distribution power lines. The product comprises graphite, preferably flaked graphite, substantially free of sand, in a drilling fluid substantially free of sand and preferably having an aqueous, bentonitic base. The drilling fluid may further comprise a gellant which preferably will have characteristics or properties such that the fluid will remain pumpable above ground or until installed but will have enhanced viscosity underground and preferably will transform underground into a solid or semi-solid.

The present disclosure further provides methods for providing a thermally conductive environment for underground electrical equipment with the product of the disclosure and provides methods of installing electrical equipment using the product of the disclosure. The present disclosure also provides methods for enhancing the thermally conductive properties of existing grouts or fill materials. In one exemplary method of the disclosure, the thermal conductivity environment of underground electrical equipment is enhanced by positioning a product of the disclosure adjacent to the equipment.

Using the product of the disclosure in trenchless drilling of a borehole through which the equipment, particularly electrical lines or cable, are pulled, or otherwise using the product of the disclosure in preparing a trench to contain said equipment, imparts or provides a thermally conductive environment for the equipment. The product of the disclosure may additionally or alternatively be placed inside pipe for containing one or more electrical lines or cable and/or the product of the disclosure may be placed on the outside of pipe containing one or more electrical lines or cable. The product of the disclosure may also be placed directly between the underground soil and electrical lines or cable or other electrical equipment even when not encased in pipe, where the product of the disclosure will help dissipate heat from electrical current passing through the equipment to the soil. The product of the disclosure may also be used in backfilling trenches. The fluidity of the product of the disclosure facilitates such various placements of the product in proximity to the electrical equipment, placements not achievable with prior art backfill materials to the same degree of even-ness and consistency, if at all. The disclosure advantageously affords more efficient dissipation of heat away from the cable, thereby enabling more electricity to run through the cable, and with lower heat which prolongs the cable life, than can be accomplished without the disclosure or with known prior art.

### DETAILED DESCRIPTION OF PREFERRED EMBODIMENTS

In the present disclosure, a highly thermally conductive fluid (or a fluid having low resistivity) is placed around buried or underground electrical equipment, such as, for example, high voltage power lines, to dissipate heat given off by the equipment in operation. Such heat dissipation allows more efficient flow of electricity through the equipment. Further, such dissipation helps keep the heat within operational design limitations for the equipment and thus does not contribute to or cause excess wear of the equipment.

Any aqueous based drilling fluid suitable for trenchless drilling or for digging or excavating trenches is believed suitable for use as the base of the fluid product of the disclosure, provided the drilling fluid is capable of suspending flaked graphite and preferably is capable of gelling to a consistency ranging from that commonly found in pudding to that commonly found in peanut butter. Aqueous bentonitic drilling fluids are most preferred. Also preferably the drilling fluid base and the fluid product of the disclosure will not contain compounds that provide high resistivity or low thermal conductivity characteristics to the fluid. The fluid product should be pumpable and substantially free of sand. Silica flour, preferably about 200 mesh material, may be added as filler to contribute to the final set of the product and as supplemental thermal enhancement material. Silica flour may also assist in achieving low hydraulic conductivity. Such silica flour lacks the abrasiveness and density of sand and thus affords utility in a drilling fluid not practicable with sand. Graphite is added to the fluid to improve the fluid's thermal conductivity properties. The graphite is flaked. The specific amount of graphite added dictates the amount or degree of the resulting thermally conductive properties, and such relationship affords significant flexibility to the fluids. For example, to achieve a Thermal conductivity of about 1.7 Wm/K (1.0 BTU/hr-ft.°F), about 0.17 kg/L (145 pounds of flaked graphite per 100 gallons) of aqueous drilling fluid would typically be needed. However, thermal conductivities of about 2.7 to 3.0 W/mK (1.6 to about 1.7 BTU/hr ft °F) or higher are achievable when adding flaked graphite to aqueous drilling fluid. The graphite may be added to aqueous fluid already prepared or being used for drilling in the field, or the fluid may be originally prepared to include the graphite.

The fluid should remain pumpable upon addition of the graphite and under subterranean conditions, at least for a time sufficient to allow or to facilitate placement of the fluid in the borehole being drilled or the trench being dug or filled or in a pipe being filled. The fluid may optionally comprise a gellant or equivalent component(s) to turn the fluid into a semi-solid or solid following such placement.

To fully appreciate the benefits of the invention, the fluid product of the disclosure is placed adjacent or proximate to the electrical equipment and preferably between the equipment and the soil covering or burying the equipment for dissipation of heat from the equipment during operation or use of the equipment. When the equipment comprises power lines, the lines may be encased in pipe or not, as the invention is effective in providing a thermally conductive environment in either situation.

According to one method of the disclosure, electrical equipment is installed by trenchless drilling, wherein a hole for receiving the equipment is drilled employing the fluid product of the disclosure. The fluid product of the disclosure may be used in drilling all or a portion of the hole. In one embodiment, a typical or traditional bentonitic drilling fluid may be used for drilling a horizontal borehole and just prior to pulling pipe and/or cable into the bore, the bentonitic drilling fluid is either replaced with the fluid of the disclosure or effectively made into the drilling fluid of the present disclosure by adding graphite thereto. During and after such drilling with the fluid of the disclosure, at least some of said fluid and particularly some graphite in said fluid deposits on the sides of said borehole and/or otherwise remains in said borehole. The electrical equipment, one or more high voltage power lines for example, is pulled through the borehole for positioning underground. The graphite provides an additional benefit of some lubrication for said pulling or installation of the electrical equipment. The amount of graphite included in the fluid depends on the thermal conductivity (resistivity) desired, as discussed above. Optionally, the fluid product of the disclosure remaining in the borehole may increase in viscosity, and may also harden, or transform to a solid or semi-solid.

During another method of the disclosure, electrical equipment is installed by drilling or excavating a trench, positioning the equipment in the trench, and then covering the equipment and/or backfilling the trench with soil. In this method, the fluid product of the disclosure may be used as a drilling fluid in excavating the trench and/or may be flowed in the trench after it is dug and preferably before the equipment is positioned in the trench. Additionally, or alternatively, the product of the disclosure may be added to the soil for use in the backfilling of the trench (after the equipment is positioned in the trench). Thus, in at least one such point in the installation, the fluid product of the disclosure is included so that it is adjacent to the equipment to facilitate dissipation of heat during use of the equipment.

In another disclosure of the invention, the fluid product of the disclosure is flowed into and/or through the inside or interior of a protective covering for the equipment, such as inside pipe encasing power lines or cable for example, preferably before the pipe is installed underground. During such flow, at least some of said fluid and particularly some graphite in said fluid deposits on the sides of said equipment and/or protective covering of said equipment. Preferably, the underground installation of the equipment will be conducted by trenchless drilling using the fluid product of the disclosure.

### Experimental

Laboratory tests were conducted to test and demonstrate the invention. In the tests, thermal conductivity was measured using the Baroid IDP Thermal Conductivity Meter available from Baroid Fluid Services, a Halliburton Company, in Houston, Texas. Examples of the ability of flaked graphite additions to increase the thermal conductivity of a base slurry containing varying amounts of graphite follow in Table I.

**Table I**

| **AQUEOUS BENTONITE FLUID** | **THERMAL CONDUCTIVITY** |
|---|---|
| Base without flaked graphite | TC-0.69 W/mK(0.4 BTU/hr ft °F) |
| Base with 0.16 kg flaked graphite per litre (130 lb flaked graphite/100 gal) | TC-1.38 W/mK (0.8 BTU/hr ft °F) |
| Base with 0.17 kg flaked graphite per litre(145 lb flaked graphite/100 gal) | TC-1.64 W/mK (0.95 BTU/hr ft °F) |
| Premixed with 35% solids | TC-1.56 W/mK (0.9 BTU/hr ft °F) |
| Premixed with 40% solids | TC-2.25 W/mK (1.3 BTU/hr ft °F) |
| Premixed with 45% solids | TC-2.78 W/mK (1.6 BTU/hr ft °F) |

The solids used in some of the test fluids were solids of the type used in "one sack" grout products as taught in United States Patent Application No. 10/767,690, filed January 29, 2004, entitled, "Grout Compositions Having High Thermal Conductivities and Methods of Using the Same" by Gary W. Matula, Toby N. McClain and Paul K. Chaney.

The foregoing description of the invention is intended to be a description of preferred embodiments. Various changes in the details of the described fluids compositions of matter and methods of use can be made without departing from the intended scope of this invention as defined by the appended claims.

## Claims

1. A method for providing a thermally conductive environment for high voltage underground power lines or other buried electrical transmission or distribution equipment to dissipate heat caused by the flow of electrical power through said equipment, said method comprising positioning a thermally conductive composition comprising flaked graphite adjacent to said equipment and effecting said positioning with an aqueous drilling fluid comprising said graphite and free of sand.

2. The method of claim 1 wherein said drilling fluid is used in trenchless construction drilling.

3. The method of claim 1 wherein said drilling fluid is used to horizontally drill a hole through which the electrical equipment is pulled for installation.

4. The method of claim 3 wherein said fluid further reduces friction on said electrical equipment during said installation.

5. The method of claim 1 wherein said drilling fluid is used in providing a trench for placement of said equipment and reduces friction on said electrical equipment during said placement.

6. The method of claim 1 wherein said drilling fluid is positioned inside pipe encasing said equipment by pumping or otherwise flowing said fluid into said pipe.

7. A method for installing high voltage power lines or other electrical transmission or distribution equipment underground, said method comprising:
(a) drilling a hole or digging or excavating a trench employing an aqueous based drilling fluid comprising flaked graphite ., and free of sand;
(b) allowing at least some of said flaked graphite to remain in said hole or trench; and
(c) positioning said equipment into said hole or trench.

8. The method of claim 7 wherein said power lines comprise cable.

9. The method of claim 7 wherein said power lines are encased in pipe.

10. The method of claim 7 further comprising including some of said drilling fluid in said pipe.

11. The method of claim 7 wherein said graphite is caused to remain in said hole or trench by causing at least some of said drilling fluid to remain in said hole or trench.

12. The method of claim 7 wherein said drilling fluid further comprises a gellant which facilitates at least some of said drilling fluid remaining in said hole or trench.

## Patentansprüche

1. Verfahren zum Bereitstellen einer wärmeleitenden Umgebung für unterirdische Hochspannungsstromleitungen oder andere vergrabene elektrische Übertragungs- oder Verteilungsausrüstung zum Ableiten von Wärme, die durch das Fließen von elektrischem Strom durch die Ausrüstung verursacht wird, wobei das Verfahren Anordnen einer wärmeleitenden Zusammensetzung, die Graphitflocken umfasst, neben der Ausrüstung und Bewirken der Anordnung mit einem wässrigen Bohrfluid umfasst, das den Graphit umfasst und frei von Sand ist.

2. Verfahren nach Anspruch 1, wobei das Bohrfluid beim Bohren für grabenlose Konstruktion verwendet wird.

3. Verfahren nach Anspruch 1, wobei das Bohrfluid zum horizontalen Bohren eines Lochs verwendet wird, durch welches die elektrische Ausrüstung zur Installation gezogen wird.

4. Verfahren nach Anspruch 3, wobei das Fluid ferner während der Installation Reibung an der elektrischen Ausrüstung reduziert.

5. Verfahren nach Anspruch 1, wobei das Bohrfluid beim Bereitstellen eines Grabens zum Anordnen der Ausrüstung verwendet wird und während der Anordnung Reibung an der elektrischen Ausrüstung reduziert.

6. Verfahren nach Anspruch 1, wobei das Bohrfluid innerhalb eines Rohrs angeordnet wird, das die Ausrüstung umschließt, indem das Fluid in das Rohr gepumpt oder anderweitig geströmt wird.

7. Verfahren zum Installieren von Hochspannungsstromleitungen oder anderer elektrischer Übertragungs- oder Verteilungsausrüstung unter der Erde, wobei das Verfahren umfasst:
(a) Bohren eines Lochs oder Graben oder Ausheben eines Grabens unter Verwendung eines Bohrfluids auf wässriger Basis, das Graphitflocken umfasst und frei von Sand ist;
(b) Zurücklassen von wenigstens einem Teil der Graphitflocken in dem Loch oder Graben; und
(c) Anordnen der Ausrüstung in dem Loch oder Graben.

8. Verfahren nach Anspruch 7, wobei die Stromleitungen Kabel umfassen.

9. Verfahren nach Anspruch 7, wobei die Stromleitungen von Rohr umschlossen werden.

10. Verfahren nach Anspruch 7, ferner umfassend Aufnehmen von wenigstens einem Teil des Bohrfluids in das Rohr.

11. Verfahren nach Anspruch 7, wobei bewirkt wird, dass der Graphit in dem Loch oder Graben zurückbleibt, indem bewirkt wird, dass wenigstens ein Teil des Bohrfluids in dem Loch oder Graben zurückbleibt.

12. Verfahren nach Anspruch 7, wobei das Bohrfluid ferner ein Geliermittel umfasst, das dafür sorgt, dass wenigstens ein Teil des Bohrfluids in dem Loch oder Graben zurückbleibt.

## Revendications

1. Procédé d'utilisation d'un environnement thermoconducteur pour des lignes électriques souterraines à haute tension ou un autre équipement de transmission ou de distribution électrique enterré pour dissiper la chaleur produite par la circulation d'électricité à travers ledit équipement, ledit procédé comprenant le positionnement d'une composition thermoconductrice comprenant du graphite en flocons à côté dudit équipement et le positionnement effectif avec un fluide aqueux de forage comprenant ledit graphite et exempt de sable.

2. Procédé selon la revendication 1, dans lequel ledit fluide de forage est utilisé dans le forage de construction sans tranchée.

3. Procédé selon la revendication 1, dans lequel ledit fluide de forage est utilisé horizontalement pour creuser un trou à travers lequel l'équipement électrique est tiré pour installation.

4. Procédé selon la revendication 3, dans lequel ledit fluide réduit en outre le frottement sur ledit équipement électrique pendant ladite installation.

5. Procédé selon la revendication 1, dans lequel ledit fluide de forage est utilisé par utilisation d'une tranchée pour un placement dudit équipement et réduit le frottement sur ledit équipement électrique pendant ledit placement.

6. Procédé selon la revendication 1, dans lequel ledit fluide de forage est positionné à l'intérieur du tuyau enveloppant ledit équipement par pompage ou sinon par écoulement dudit fluide dans ledit tuyau.

7. Procédé d'installation de lignes électrique à haute tension ou d'autres équipements de transmission ou de distribution en sous-sol, ledit procédé comprenant :
(a) le forage d'un trou ou le creusement ou l'excavation d'une tranchée employant un fluide de forage à base aqueuse comprenant du graphite en flocons et exempt de sable ;
(b) le fait de laisser au moins une partie dudit graphite en flocons décanter dans ledit trou ou dans ladite tranchée ; et
(c) le positionnement dudit équipement dans ledit trou ou dans ladite tranchée.

8. Procédé selon la revendication 7, dans lequel lesdites lignes d'électricité comprennent un câble.

9. Procédé selon la revendication 7, dans lequel lesdites lignes électriques sont intégrées dans le tuyau.

10. Procédé selon la revendication 7, comprenant en outre l'inclusion d'une partie dudit fluide de forage dans ledit tuyau.

11. Procédé selon la revendication 7, dans lequel ledit graphite est amené à rester dans ledit trou ou dans ladite tranchée en amenant au moins une partie dudit fluide de forage à rester dans ledit trou ou dans ladite tranchée.

12. Procédé selon la revendication 7, dans lequel ledit fluide de forage comprend en outre un gélifiant qui facilite le fait qu'au moins une partie dudit fluide de forage reste dans ledit trou ou dans ladite tranchée.
